# EUROPÄISCHE PATENTSCHRIFT

(11) **EP 0 482 159 B1**
(45) Veröffentlichungstag und Bekanntmachung des Hinweises auf die Patenterteilung: **25.01.1995**
(21) Anmeldenummer: 91908802.1
(22) Anmeldetag: 10.04.1991
(51) Int. Cl.: B23C 3/00, F16L 55/16, F16L 55/18

(54) **VERFAHREN ZUR MATERIALABTRAGUNG IN ROHREN IM BEREICH DER EINMÜNDUNG VON ABZWEIGROHREN IN EIN HAUPTROHR SOWIE ABTRAGVORRICHTUNG ZUR DURCHFÜHRUNG DIESES VERFAHRENS**
PROCESS FOR ABRADING MATERIAL FROM INSIDE PIPES AT JUNCTIONS WHERE BRANCH PIPES JOIN MAIN PIPES, AND AN ABRADING DEVICE FOR CARRYING OUT THE PROCESS
PROCEDE POUR L'ENLEVEMENT DE MATIERE DANS DES TUYAUX DANS LA ZONE DE JONCTION DE TUYAUX DE DERIVATION DANS UN TUYAU PRINCIPAL, AINSI QUE DISPOSITIF D'ENLEVEMENT POUR LA MISE EN OEUVRE DE CE PROCEDE

(30) Priorität: 12.04.1990 AT 883/90
(43) Veröffentlichungstag der Anmeldung: 29.04.1992
(73) Patentinhaber: ETR-Holzgethan Tiefbautechnik GmbH, A-2733 Grünbach am Schneeberg (AT)
(72) Erfinder: TRUMMERT, Otto, A-2102 Bisamberg (AT)
(74) Vertreter: Collin, Hans, Dipl.-Ing. Dr.
(86) Internationale Anmeldenummer: AT9100052
(87) Internationale Veröffentlichungsnummer: WO9116162

(56) Entgegenhaltungen:
- EP-A- 0 219 404
- EP-A- 0 233 555
- EP-A- 0 253 588
- EP-A- 0 310 679
- WO-A-87/05984

## Beschreibung

Die Erfindung betrifft ein Verfahren zur Materialabtragung in Rohren im Bereich der Einmündung von Abzweigrohren in ein Hauptrohr mittels einer Abtragvorrichtung, die einen in einem Rohr verspannbaren Träger und einen gegenüber dem Träger verlagerbaren Abtragkopf mit einem Abtragwerkzeug aufweist, insbesondere zum Durchbrechen der Wandung eines in ein Hauptrohr eingezogenen Futterrohrs, sowie eine entsprechende Abtragvorrichtung gemäß Oberbegriff von Patentanspruch 2.

Ein derartiges Verfahren mit Vorrichtung ist z.B. aus der DE-OS 34 17 471 bekannt. Nach diesem Verfahren werden nach dem Ausfüttern eines Hauptrohrs mit einem Futterrohr vom Inneren des Futterrohrs aus an den Einmündungsstellen von Abzweigrohren entsprechende Durchbrüche ausgefräst. Bei der dafür vorgesehenen Vorrichtung ist der Fräser als Scheibenfräser ausgebildet und in einem in der Rohrleitung abgestützten verfahrbaren Schlitten in zwei Richtungen verstellbar, mittels diesem Verdrehbar sowie um eine parallel zur Längsachse der Rohrleitung angeordnete Rotationsachse antreibbar gehalten. Dabei erfolgt der Fräservorschub radial.

Mit diesem System und auch mit anderen bekannten Systemen sind sehr schwierige Meß- und Erfassungsarbeiten verbunden, da die exakte Lage der Abzweigrohre vor dem Ausfüttern des Hauptrohrs kartiert werden muß; in den meisten Fällen wird die Ausfräsung nur zumindest halbwegs an der richtigen Stelle angebracht werden können, in vielen Fällen ist eine Aufgrabung nötig und jedenfalls werden, wenn das Hauptrohr schliefbar ist, aufwendige Nacharbeiten fällig, da mittels der bekannten Fräser und Anordnungen keine exakte Winkellage erzielbar ist, so daß keine in der Strömungsrichtung der Abzweigrohre liegenden Durchbrüche herstellbar sind.

Es bestand die Aufgabe, ein Abtragungssystem zu finden, mit dem sich die den bisherigen Systemen inhärenten Nachteile beseitigen lassen.

Zur Lösung dieser Aufgabe wird vor allem nicht vom Inneren des Hauptrohrs, sondern vom Inneren der Abzweigrohre her abgetragen. Dementsprechend ist das erfindungsgemäße Verfahren dadurch gekennzeichnet, daß die Materialabtragung vom Inneren eines Abzweigrohrs her in Einmünderichtung durchgeführt wird, wobei vorzugsweise die Abtragung so erfolgt, daß im Abtragbereich eine lichte Weite und eine Einmünderichtung entsprechend derer des Abzweigrohrs erhalten werden.

Dieses Verfahren setzt voraus, daß die Abtragvorrichtung über zu den Abzweigleitungen führende Putzschächte in die Abzweigleitungen einführbar und dort bis vor Ort verschiebbar ist.

Eine Grundbedingung für eine universelle Einsetzbarkeit derartiger Abtragvorrichtungen ist die Möglichkeit, die handelsüblichen Rohrbögen, Krümmer und Kupplungen zu durchfahren.

Zur Lösung dieser Aufgabe ist die erfindungsgemäße Abtragvorrichtung, die einen in einem Rohr verspannbaren Träger und einen gegenüber dem Träger verlagerbaren Abtragkopf mit einem Abtragwerkzeug aufweist, dadurch gekennzeichnet, daß das Längsprofil der Vorrichtung eine zentrale Einziehung aufweist, insbesondere doppelkeulen- oder hantelförmig ist und/oder Träger und Abtragkopf über ein Verbindungsglied geringen Durchmessers, insbesondere kardanisch, miteinander verbunden sind.

Das Vorortbringen und Zurückziehen der erfindungsgemäßen Abtragvorrichtungen erfolgt z.B. mittels flexibler GFK-Schubrohrstangen.

Als Abtragwerkzeug ist dabei u.a. an ein übliches nichtschlagendes Werkzeug gedacht, z.B. an eine Säge, oder an einen Fräser, oder insbesondere an einen Höchstdruckwasserstrahl (z.B. mit etwa 3000 bar).

In üblicher Weise wird dabei der Träger im Abzweigrohr verspannt, der Vorschub des Abtragkopfes, der das Abtragwerkzeug trägt, erfolgt axial. Dabei kann ein Fräswerkzeug vorgesehen sein, das mit radial ausfahrbaren Messern, Wendeplatten etc. versehen ist; es kann auch ein Fräswerkzeug vorgesehen werden, das an einem um die Vorschubachse rotierenden, gegebenenfalls radial klappbaren oder an einem um die Vorschubachse taumenden Arm angeordnet ist. Diese Maßnahmen dienen einerseits dazu, die Werkzeuge während des Verfahrens der Abtragvorrichtung im Abzweigrohr zu schützen, anderseits zur Erfassung des gesamten abzutragenden Bereiches.

Vorteilhaft ist das Abtragwerkzeug mit einem auf die lichte Weite des Rohrs, in dem die Vorrichtung arbeitet, einstellbaren oder diese abtastenden Begrenzer gekoppelt.

Der Vorschub sowie das Rückziehen des das Abtragwerkzeug haltenden Abtragkopfes sowie der Antrieb des Abtragwerkzeugs erfolgt in üblicher Weise (pneumatisch, hydraulisch oder mechanisch, z.B. über elektrische Antriebe, wobei pneumatisch bevorzugt ist); insbesondere sind dabei für Vorschub und Rückzug, die hydraulisch gedämpft sein können, automatische Endschalter zur Unterbrechung der Energiezufuhr vorgesehen.

Bevorzugt weist der Träger anstelle üblicher mechanischer Spannbacken aufblasbare Anpreßringe auf, die bei einer geringeren Flächenpressung einen festeren Halt ergeben.

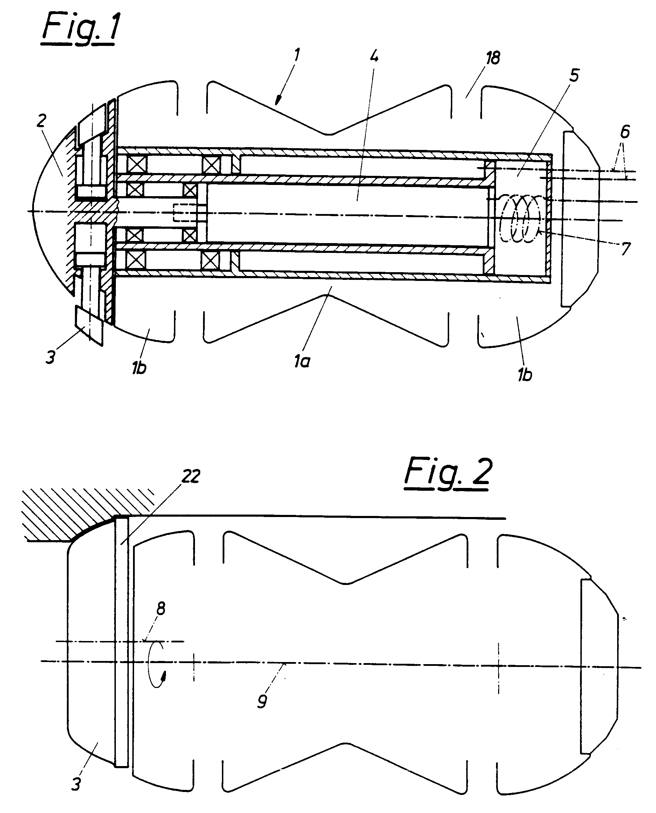

Die Erfindung wird im folgenden anhand von Ausführungsbeispielen unter Bezugnahme auf die Zeichnung näher erläutert, in der die Figuren 1 bis 6 schematische Seitenansichten bzw. Schnittansichten von rohrmolchartigen Abtragvorrichtungen zeigen.

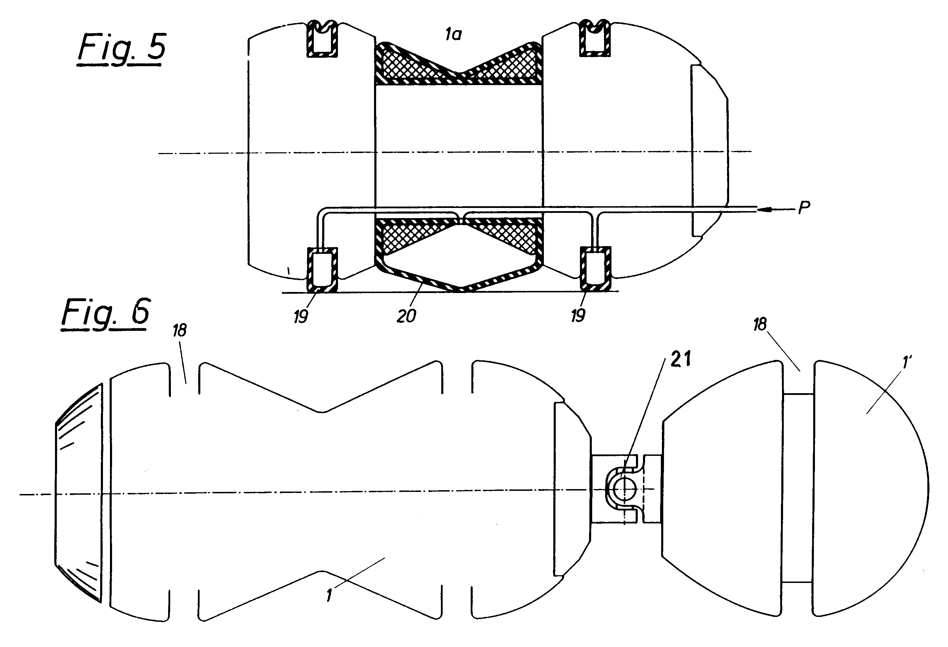

Man erkennt, daß die Abtragvorrichtungen die Form von Rotationskörpern oder gelenkig verbundenen Rotationskörpern (Fig. 6) aufweisen.

Das Charakteristikum ist eine Profileinziehung im mittleren Bereich der Rotationskörper gegenüber dickeren Endabschnitten.

Die in den Fig. 1 bis 5 dargestellte starre Abtragvorrichtung und auch der eine der zwei Abschnitte der gelenkig zusammenwirkenden Abtragvorrichtung gemäß Fig. 6 zeigt einen etwa doppelkeulenförmigen Längsabschnitt, in dem ein eingezogener Bereich 1a zwischen zwei Bereichen 1b,1b mit größerem Querschitt angeordnet ist. In den eingezogenen Bereich 1a tritt beim Durchfahren von Krümmungen der kurveninnere Rohrabschnitt ein. Gegebenenfalls können am Umfang der Bereiche 1b,1b mit größerem Querschnitt zusätzlich Laufwalzen angeordnet sein, um das Verfahren der Abtragvorrichtung 1 in Rohren zu erleichtern.

An der Stirnseite der Abtragvorrichtung ist ein kalottenförmiger, an seiner ganzen Haubenfläche mit Fräsmessern 3 versehener Abtragkopf 2 vorgesehen, der einerseits (in den Figuren nach links) zum Werkzeugvorschub aus dem Träger 1 ausgefahren (und wieder rückgestellt) werden kann und anderseits zum Materialabtragen rotiert, wozu ein Motor 4, z.B. eine druckluftgetriebene Turbine, vorgesehen ist. In der in Fig. 1 dargestellten Ausführungsform wird der Motor 4 zusammen mit dem Fräskopf 2 ausgefahren und rückgestellt; dazu ist schematisch eine Druckkammer 5 mit einer Speisung 6 und ein Druckschlauch 7 zur Energieversorgung des Motors 4 dargestellt. Die Anordnung kann auch so gewählt werden, daß der Motor 4 beim Ausfahren des Fräskopfs 2 stehen bleibt.

In Fig. 1 erkennt man weiterhin, daß die Messer 3 an der Peripherie des Fräskopfs 2 radial ausfahrbar vorgesehen sind.

In Fig. 2 erkennt man als Fräswerkzeug einen Tellerfräser 3, der in einem nicht dargestellten, ausfahrbaren Abtragkopf drehbar so gelagert ist, daß seine Antriebsachse 8 um die Achse 9 der Abtragvorrichtung 1 rotiert. Dies erfolgt in üblicher Weise z.B. so, daß der Tellerfraser 3 in einer um die Achse 9 drehbaren Scheibe gelagert ist. In Fig. 2 ist der Tellerfräser 3 nicht maßstäblich abgebildet; in der Praxis wird ein Fräser kleineren Durchmessers verwendet, dessen Durchmesser z.B. etwa der halben Nennweite der zu befahrenden Rohre entspricht. Dabei kann vorgesehen sein, den Fräser 3 an seiner Haltescheibe über einen Schwenkhebel anzulenken, so daß der durch den Fräser erfaßbare Durchmesser erhöht wird.

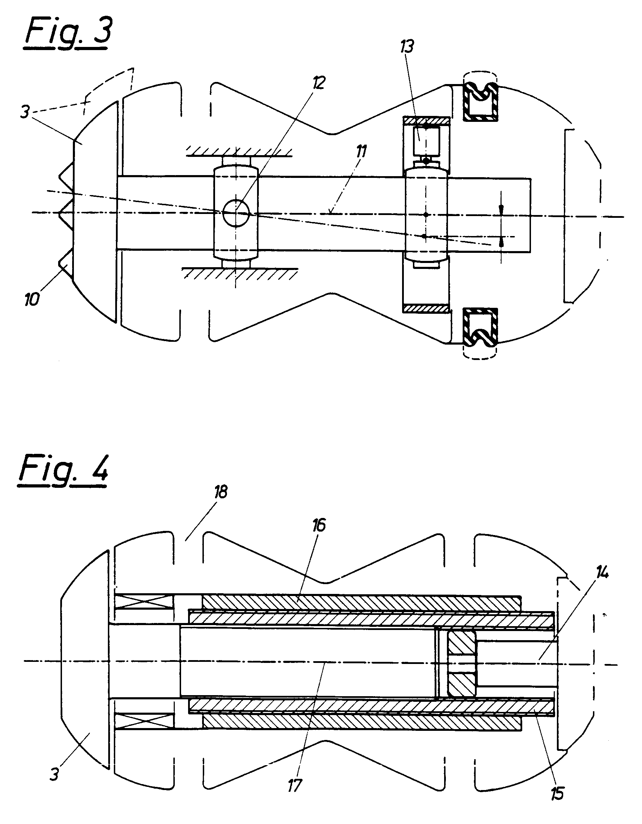

In Fig. 3 ist eine Konstruktion angedeutet, bei der der ausfahrbare, einen auch mit Stirnmessern 10 ausgerüsteten Tellerfräser 3 tragende Abtragkopf gegenüber der Achse 9 der Abtragvorrichtung 1 taumelbar gelagert ist. Zu diesem Zweck ist eine Führungshülse 11 in einem Kardangelenk 12 gelagert und ihre Winkellage wird über Steuerzylinder 13 verändert. In der mit der Achse 9 der Abtragvorrichtung 1 zusammenfallenden Null-Lage wird zuerst eine Öffnung "gebohrt" und dann radial fräsend erweitert; die maximale Winkelstellung des Fräsers 3 ist strichliert angedeutet.

Fig. 4 zeigt eine besondere Vorschubeinrichtung für den Abtragkopf 2 und das Fräswerkzeug 3 zur Erhöhung des Vorschubwegs. Ein Vorschubantriebsmotor 14 verdreht eine Gewindehülse 15 in einer festen Außenhülse 16. Die Hülsen 15 und 16 tragen korrespondierende Gewinde. An der Innenseite der Hülse 15 ist ein Gewinde entgegengesetzter Steigung angeordnet, und in der Hülse 15 ist eine mit einem korrespondierenden Außengewinde versehene Hülse unverdrehbar geführt, in der der Antriebsmotor 4 und der Abtragkopf 2 samt Abtragwerkzeug 3 gehalten ist. Die maximale Ausnutzung dieser Konstruktion ist die Ausführungsform nach Fig. 6.

In Fig. 5 ist im Detail gezeigt, daß anstelle üblicher Verspannbacken erfindungsgemäß der Einsatz von in Umfangsnuten 18 der Abtragvorrichtung 1 eingesetzten Profilschläuchen 19 bevorzugt wird. Es geht dabei um handelsübliche Produkte, z.B. aus Silikonkautschuk, die ihren Durchmesser beim Aufblasen vergrößern und die Abtragvorrichtung 1 im Rohr am ganzen Umfang festspannen. Es ist auch möglich, im Bereich der Einziehung 1a einen derartigen Schlauch 20 anzuordnen.

Ein Hauptvorteil gegenüber Spannbacken ist dabei die damit erzielbare völlig zentrische Positionierung der Abtragvorrichtung 1 in einem Rohr.

Fig. 6 zeigt eine kombinierte Abtragvorrichtung, in der ein Träger 1 nach Fig. 4 über ein Kardangelenk 21 mit einem im wesentlichen kugel- oder eiförmigen Trägerabschnitt 1' verbunden ist, in dem sich der Antriebsmotor für den Vorschub befindet. Das Kardangelenk 21 ist Teil einer Antriebswelle, die den Antriebsmotor mit der Gewindehülse 15 verbindet. Auf diese Weise läßt sich die volle Länge des Trägers 1 für den Vorschub ausnutzen.

Wie bereits erwähnt, können die Abtragwerkzeuge bzw. Abtragköpfe mit Abtastern bzw. Begrenzern ausgerüstet sein, die die Rohrinnenwand abfühlen bzw. den Arbeitsbereich der Abtragwerkzeuge radial begrenzen. Als einfaches Beispiel hiefür ist gemäß Fig. 2 der Scheibenfräser an einer Kunststoffscheibe 22 angeordnet, deren Umfang im Betrieb des Fräsers an der Rohrinnenwand gleitet.

Damit rohrwandschonend gearbeitet werden kann, sollte bei Verwendung einer ballig-kugeligen Abtastrolle das Fräswerkzeug ballig-konisch ausgebildet sein.

Mit dem erfindungsgemäßen System entfallen jegliche Meß-, Speicher- und Positionierprobleme; die erfindungsgemäße Abtragvorrichtung steht immer zentrisch im Abzweigrohr, so daß die Strömungsrichtung (Achsrichtung) des Abzweigrohrs beim Futterrohrdurchbruch exakt beibehalten wird. Damit entfällt jede Beschädigung von "gesundem" Rohrmaterial und jedes Nacharbeiten bzw. Ausbessern vom Hauptrohr her.

Die Verbringung von erfindungsgemäßen Abtragvorrichtungen zum und vom Ort kann gegebenenfalls über an diesen vorgesehene Antriebsrollen od.dgl. automatisch erfolgen; für kürzere Strecken wird händisches Verbringen, insbesondere mittels flexibler GFK-Rohrstangen, bevorzugt.

## Patentansprüche

1. Verfahren zur Materialabtragung in Rohren im Bereich der Einmündung von Abzweigrohren in ein Hauptrohr mittels einer Abtragvorrichtung, die einen in einem Rohr verspannbaren Träger (1) und einen gegenüber dem Träger verlagerbaren Abtragkopf (2) mit einem Abtragwerkzeug (3) aufweist, insbesondere zum Durchbrechen der Wandung eines in ein Hauptrohr eingezogenen Futterrohrs, dadurch gekennzeichnet, daß die Materialabtragung vom Inneren eines Abzweigrohrs her in Einmünderichtung durchgeführt wird, wobei die Abtragung so erfolgt, daß im Abtragbereich eine lichte Weite und eine Einmünderichtung entsprechend derer des Abzweigrohrs erhalten werden.

2. Abtragvorrichtung zur Durchführung des Verfahrens nach Anspruch 1, die einen in einem Rohr verspannbaren Träger (1) und einen gegenüber dem Träger verlagerbaren Abtragkopf (2) mit einem Abtragwerkzeug aufweist, dadurch gekennzeichnet, daß das Längsprofil der Vorrichtung eine zentrale Einziehung (1a) aufweist, insbesondere doppelkeulen- oder hantelförmig ist und/oder Träger (1') und Abtragkopf (2) über ein Verbindungsglied geringen Durchmessers, insbesondere kardanisch, miteinander verbunden sind.

3. Vorrichtung nach Anspruch 2, dadurch gekennzeichnet, daß das Abtragwerkzeug in bekannter Weise ein Fräswerkzeug (3) ist, dessen Vorschub axial erfolgt.

4. Vorrichtung nach Anspruch 3, dadurch gekennzeichnet, daß das Fräswerkzeug (3) mit radial ausfahrbaren Messern versehen ist.

5. Vorrichtung nach Anspruch 3, dadurch gekennzeichnet, daß das Fräswerkzeug (3) an einem um die Vorschubachse rotierenden, gegebenenfalls radial klappbaren Arm angeordnet ist.

6. Vorrichtung nach Anspruch 3, dadurch gekennzeichnet, daß das Fräswerkzeug (3) an einem um die Vorschubachse taumelnden Arm (11) angeordnet ist.

7. Vorrichtung nach einem der Ansprüche 2 bis 6, dadurch gekennzeichnet, daß das Abtragwerkzeug (3) mit einem auf die lichte Weite des Rohrs, in dem die Vorrichtung arbeitet, einstellbaren oder diese abtastenden Begrenzer gekoppelt ist.

8. Vorrichtung nach einem der Ansprüche 2 bis 7, dadurch gekennzeichnet, daß ein pneumatischer Antrieb und/oder Vorschub des Abtragwerkzeugs vorgesehen ist, wobei insbesondere Endschalter zur Unterbrechung der Energiezufuhr beim Vorschub vorgesehen sind.

9. Vorrichtung nach einem der Ansprüche 2 bis 8, dadurch gekennzeichnet, daß der Träger (1) anstelle üblicher Spannbacken aufblasbare Anpreßringe (19, 20) aufweist.

10. Vorrichtung nach einem der Ansprüche 2 bis 9, dadurch gekennzeichnet, daß Träger (1) und Abtragkopf (2) zwei über eine Vorschubtriebwelle verbundene getrennte Bauteile sind und im Abtragkopf eine Gegensteigungsspindel (15) zum Vorschub des Abtragwerkzeugs (3) vorgesehen ist.

## Claims

1. A process for abrading material from inside pipes at junctions where branch pipes join main pipes by means of an abrading device having a carrier (1) tensionally securable inside a pipe and an abrading head (2) having an abrading tool (3), the head being displaceable relative to the carrier, particularly for the purpose of penetrating a wall of a pipe lining inserted into a main pipe, characterized in that material abrasion is performed from inside a branch pipe in the direction of the junction, the abrasion being such that in the abraded area an internal diameter and a direction of the junction corresponding to that ot the branch pipe is provided.

2. An abrading device for carrying out the process according to claim 1 having a carrier (1) tensionally securable inside a pipe and an abrading head (2) having an abrading tool, the head being displaceable relative to the carrier, characterized in that the longitudinal profile of the device has a central recess (1a) and particularly a double-club or dumbbell shape, and/or in that the carrier (1') and the abrading head (2) are connected with each other via a low-diameter connection member, particularly in a cardanic manner.

3. A device according to claim 2, wherein the abrading tool is a conventional milling cutter which is advanced axially.

4. A device according to claim 3, wherein the milling cutter (3) is provided with cutters to be advanced radially.

5. A device according to claim 3, wherein the milling cutter (3) is located at an arm which rotates about the advance axis and which may be radially foldable.

6. A device according to claim 3, wherein the milling cutter (3) is located at an arm (11) wobbling about the advance axis.

7. A device according to any one of claims 2 to 6, wherein the abrading tool (3) is coupled to a limiter which scans, and is adaptable to, the internal diameter of the pipe in which the device operates.

8. A device according to any one of claims 2 to 7, wherein a pneumatic drive and/or advance of the abrading tool is provided, and particularly wherein limit switches are provided to interrupt the energy supply during advance.

9. A device according to any one of claims 2 to 8, wherein the carrier (1) has inflatable pressing rings (19, 20) instead of the conventional clamping jaws.

10. A device according to any one of claims 2 to 9, wherein the carrier (1) and the abrading head (2) are two structural elements connected by an advance driving shaft and a double-threaded spindle (15) is provided within the abrading head to advance the abrading tool (3).

## Revendications

1. Procédé pour l'enlèvement de matière dans des tuyaux dans la zone de jonction de tuyaux de dérivation dans un tuyau principal au moyen d'un dispositif d'enlèvement qui comprend un support (1) qui peut être haubané dans un tuyau et une tête d'enlèvement (2) ayant un outil d'enlèvement, la tête d'enlèvement étant déplaçable relatif au support, en particulier afin de percer la paroi d'un tuyau de protection inséré dans un tuyau principal, caractérisé en ce que l'enlèvement de matière est accompli de l'intérieur d'un tuyau de dérivation en direction de la jonction, l'enlèvement étant tel que l'on obtient dans la zone d'enlèvement un diamètre intérieur et une direction de jonction correspondant au tuyau de dérivation.

2. Dispositif d'enlèvement pour la mise en oeuvre de procédé selon la revendication 1, comprenant un support (1) qui peut être haubané dans un tuyau et une tête d'enlèvement (2) ayant un outil d'enlèvement, la tête d'enlèvement étant déplaçable relatif au support, caractérisé en ce que le profil longitudinal du dispositif a un creux central (1a), qu'il est en forme de massue double ou de haltère et/ou que le support (1') et la tête d'enlèvement (2) sont joints par un membre de liaison d'un diamètre inférieur, particulièrement à la Cardan.

3. Dispositif selon la revendication 2, caractérisé en ce que l'outil d'enlèvement et un outil de fraisage (3) dont l'avancement se fait axialement.

4. Dispositif selon la revendication 3, caractérisé en ce que l'outil de fraisage (3) comprend des lames qui peuvent être sorties radialement.

5. Dispositif selon la revendication 3, caractérisé en ce que l'outil de fraisage (3) est disposé à un bras tournant autour d'un axe d'avancement, le bras pouvant être replié radialement, s'il est nécessaire.

6. Dispositif selon la revendication 3, caractérisé en ce que l'outil de fraisage (3) est disposé à un bras (11) chancelant autour d'un axe d'avancement.

7. Dispositif selon une des revendications 2 à 6, caractérisé en ce que l'outil de fraisage (3) est coupé à un limiteur adaptable au diamètre intérieur du tuyau dans lequel le dispositif opère ou balayant ledit diamètre.

8. Dispositif selon une des revendications 2 à 7, caractérisé en ce qu'un entraînement pneumatique et/ou un avancement de l'outil d'enlèvement est prévu, une fin de course étant particulièrment prévue afin d'interrompre l'alimentation en énergie durant l'avancement.

9. Dispositif selon une des revendications 2 à 8, caractérisé en ce que le support (1) dispose des anneaux de pression (19, 20) gonflables au lieu des mâchoires de serrage conventionnelles.

10. Dispositif selon une des revendications 2 à 9, caractérisé en ce que le support (1) et la tête d'enlèvement (2) sont deux éléments structuraux joints par une arbre de commande d'avancement et que dans la tête d'enlèvement est disposé un pivot à deux filets (15) pour avancer l'outil d'enlèvement (3).
